# NEUE EUROPÄISCHE PATENTSCHRIFT

(11) **EP 0 106 997 B2**
(45) Veröffentlichungstag und Bekanntmachung des Hinweises auf die Entscheidung über den Einspruch: **21.02.1996**
(45) Hinweis auf die Patenterteilung: 18.10.1989
(21) Anmeldenummer: 83108859.6
(22) Anmeldetag: 08.09.1983
(51) Int. Cl.: B07B 9/00, B03B 9/06, C22B 1/00

(54) **Verfahren zum Aufbereiten von Müllschrott und Einrichtung zu dessen mechanischer Bearbeitung**
Method of processing scrap metal and plant for its mechanical processing
Procédé de traitement des déchets métalliques et installation pour leur traitement mécanique

(30) Priorität: 22.10.1982 DE 3239135
(43) Veröffentlichungstag der Anmeldung: 02.05.1984
(73) Patentinhaber: GOTTHELF, Hans, Dr., D-58239 Schwerte (DE)
(72) Erfinder: Gotthelf, Hans, D-5840 Schwerte (DE); Heeren, Evert, D-2952 Weener (DE)

(56) Entgegenhaltungen:
- DE-A- 2 749 380
- DE-A- 3 022 695
- DE-B- 1 037 139
- DE-C- 674 114
- FR-A- 1 510 164
- FR-A- 2 304 404
- LU-A- 41 985
- US-A- 3 905 556
- Vortrag von Wilhelm Linnerz, Titel "Müllschrott", 27.11.1980, Gelsenkirchen (DE)

## Beschreibung

Die Erfindung betrifft ein Verfahren zum Aufbereiten von Müllschrott zur Gewinnung des darin enthaltenen Metalls, mit dem Ziel der wirtschaftlichen Rückführung des gewonnenen eisenhaltigen Materials in den Hüttenkreislauf, und eine Einrichtung zur mechanischen Bearbeitung - Zerkleinerung und Reibbehandlung - von Müllschrott.

Verbrannter und unverbrannter Müllschrott weisen einen erheblichen Anteil an nichtmetallischen Beimengungen auf. Die Trennung des im Müll enthaltenen Eisens von den nichteisenhaltigen Bestandteilen erfolgt in den Abfallbeseitigungsanlagen durch magnetische Abscheidung. Der so gewonnene eisenhaltige Schrott, der heute zum größten Teil mit über 90% aus dem sogenannten Müllverbrennungsschrott besteht und hauptsächlich im Hochofen eingesetzt wird, ist im Stahlwerk entweder überhaupt nicht oder nur unter erschwerten Bedingungen, keinesfalls aber wirtschaftlich zu verarbeiten. Dies wegen seines gegenüber anderen Schrottsorten
- geringeren Metallgehaltes (ca. 60 bis 70%) und dementsprechend hohen Anteils nichtmetalscher Bestandteile (dieser Wert liegt ca. 20 bis 30% unter denen anderer Schrottsorten),
- geringen Schüttgewichtes (0,3 bis 0,4 t/m³) und
- chemischen Zusammensetzung bzw. Analyse des Schrotts in Bezug auf Schwefel (bis 0,1%), Zinn (bis 0,6%), Kupfer, Chrom und Nickel.

Neben dem niedrigen Metallgehalt liegen im Falle verbrannten Müllschrotts entsprechend höhere Schlackenbestandteile vor. Diese «engeschleppte» Schlackenmenge erhöht nicht nur die metallurgische Schlackenmenge additiv, sondern darüber hinaus überproportional. Die zu geringe Basizität (Verhältnis CaO/SiO₂) der Verbrennungsschlacke macht zusätzlich entsprechende Kalkmengen für den Stahlerzeugungsprozeß erforderlich. Wird letzteres unterlassen, ergeben sich aufgrund der dann tieferen Schlacken-Endbasizität eine schlechtere Schwefelverteilung zwischen Bad und Schlacke, d. h. überhöhte oder sogar stark überhöhte Schwefelgehalte im Fertigstahl.

Außerdem sind die unterschiedlich hohen und unbekannten Eisenoxidgehalte des verbrannten Müllschrotts verantwortlich für
a) die Schwierigkeiten bei der Einstellung der geforderten Stahlabstichtemperaturen (es treten anteilmäßig zu viele «überkühlte» Schmelzen auf; um diese vergießbar zu machen, muß ein nicht vorgesehenes «Nachblasen» in Kauf genommen werden),
b) das verminderte Ausbringen von «gutem» Rohstahl, wenn ein Nachblasen der Schmelze erforderlich wird und dadurch stark überhöhte Eisengehalte in der Schlacke die Folge sind,
c) den Mehrverbrauch an teueren Desoxidationsmetallen, wenn wegen der erhöhten Eisengehalte in der Schlacke zwangsläufig erhöhte Sauerstoffgehalte im Bad auftreten,
d) die aufgrund erhöhter Desoxidation im Trend geringere Stahlreinheit.

Bei einem bekannten Verfahren, das vorzugsweise bei der Oberflächenreinigung verformbarer Hohlkörper Anwendung finden soll (DE-A-3 022 695), durchlaufen die Hohlkörper nacheinander eine Prallphase, eine Aufreißphase und eine Verdichtungsphase, wobei die derart behandelten Hohlkörper in einem steuerbaren Teilstrom rückgeführt und den unbehandelten Hohlkörpern zugesetzt werden. Dieses Verfahren setzt voraus, daß die aufzubereitenden Hohlkörper bereits aus dem Müllschrott aussortiert sind. Für die Aufbereitung von Müllschrott ist dieses Verfahren daher nicht geeignet.

Es sind auch bereits Vorrichtungen zum Zerkleinern von industriellen Wracks bekannt (vgl. DE-A-2 260 713 und FR-A-1 510 164). Diese Vorrichtungen sind aber nur zum Zerkleinern von Kraftfahrzeugkarosserien geeignet.

Der Erfindung liegt die Aufgabe zugrunde, den heute auf dem Markt erhältlichen Müllschrott derart aufzubereiten, daß dessen wirtschaftliche Verwendung bei der Rohstahlerzeugung - also im Stahlwerk - möglich ist.

Die Lösung der gestellten Aufgabe besteht darin, daß der Müllschrott einer Trocknung und einer Vorreinigung in einer Drehtrommel, einer Kaskade oder mittels eines Vibrationssiebes unterzogen wird, um den Metallgehalt des Müllschrotts auf mindestens 70% zu erhöhen, daß der Müllschrott sodann zerkleinert und die Oberfläche der Bestandteile des Müllschrotts einer Reibbeanspruchung ausgesetzt werden und daß schließlich eine Windsichtung und anschließend eine magnetische Abscheidung erfolgt, wodurch der Metallgehalt des Müllschrotts auf mindestens 90% und sein Schüttgewicht auf mindestens 1,0 t/m³ erhöht werden.

Durch das erfindungsgemäße Verfahren erhält der Müllschrott einen hohen Reinheitsgrad. Die vom Eisen eingeschlossenen bzw. festgehaltenen Fremdstoffe (Schlacke, Papier, Plastik, Gummi u.dgl.) und die an der Oberfläche anhaftenden Fremdstoffe (Oxid- und Lackschicht) werden freigesetzt bzw. abgerieben.

Die durch die Aufbereitung bewirkte Erhöhung des Schüttgewichtes und des Reinheitsgrades bringen für beide Müllschrottsorten - verbrannt/unverbrannt - den Vorteil, daß Chargierleistung und Ausbringen im Stahlerzeugungsaggregat ganz wesentlich zu günstigeren Kosten verschoben werden.

Darüber hinaus bietet der aufbereitete gegenüber dem unaufbereiteten Verbrennungsschrott hinsichtlich seines metallurgischen Verhaltens folgende Verbesserungen:
- Es ist weder ein zusätzlicher Kalkbedarf erforderlich noch ergeben sich höhere Schlackenmengen.
- Es wird eine höhere Schlacken-Endbasizität erreicht, die eine bessere Schwefelverteilung zwischen Bad und Schlacke zur Folge hat.
- Es ist eine bessere Einstellung der geforderten Abstichtemperatur möglich.
- Es wird ein höheres Rohstahlausbringen durch nicht notwendiges Nachblasen (Fe-Gehalt in der Schlacke) erreicht.
- Es sind weniger Desoxidationsmittel notwendig.
- Infolge der geringen Desoxidation tritt eine bessere Stahlreinheit auf.

Im Falle unverbrannten Müllschrotts wird durch die quantitative Abtrennung der im Müllschrott enthaltenen nichtmetallischen Bestandteile, wie Papier, Plastik, Gummi o.dgl. und die intensive Oberflächenbearbeitung zur Entfernung der Lacke erst die Voraussetzung oder Vorbedingung für eine Verarbeitung im Hüttenbereich (Stahlwerk und auch Hochofen) geschaffen.

Für beide Müllsorten - verbrannt/unverbrannt ergibt sich durch das erfindungsgemäße Verfahren der zusätzliche Vorteil, daß der gewonnene Müllschrott wegen seiner Kleinstückigkeit auch den Einsatz in modernen Großhochöfen zuläßt.

Die mechanische Bearbeitung bringt darüber hinaus sowohl für den verbrannten als auch für den unverbrannten Müllschrott ein deutliches Absenken der auf der Oberfläche befindlichen Zinnauflage (bis zu 60%). Außerdem werden durch die mechanische Bearbeitung die Kupfer-, Chrom- und Nickelgehalte um mehr als 50% vermindert. Damit ist der nach dem erfindungsgemäßen Verfahren aufbereitete Müllschrott dem aus Autokarossen hergestellten Shredderschrott in seinen physikalischen und bis auf den Zinn auch chemischen Beschaffenheit gleichwertig. Dem höheren Zinneinbringen wird mit der beim Blasstahlwerk üblichen Verdünnung über das Roheisen entsprochen. Es ist solange kein Preisabzug notwendig, wie wegen zu hoher Endzinngehalte im Fertigstahl nicht zusätzlich ein teurerer Eisenträger eingesetzt werden muß.

Die Wirtschaftlichkeit des erfindungsgemäßen Verfahrens kann noch dadurch erhöht werden, daß der Müllschrott in mindestens zwei Fraktionen - eine Grob- und eine Feinfraktion - getrennt wird, die gesondert aufbereitet werden, wobei in weiterer Ausgestaltung der Erfindung die Trocknung und die Vorreinigung des Müllschrotts sowie die Trennung in Fraktionen gleichzeitig erfolgt. Die Trennung des Müllschrotts in Fraktionen hat zum Ziel, den kleineren Dosenschrott mit den hohen Zinngehalten schon in diesem Stadium von dem sperrigen, unverzinnten Material zu trennen. Dies ist wichtig im Hinblick auf eine gegebenenfalls später beabsichtigte Entzinnung des aufbereiteten Müllschrotts. Außerdem kann die Einrichtung für die mechanische Bearbeitung des Müllschrotts dann für den ausnahmslos leichten Schrott anlagetechnisch anders ausgelegt werden, z.B. in einer leichteren Bauweise, und dadurch mit geringeren Investitionskosten erstellt werden.

Nach einem weiteren Merkmal der Erfindung wird unmittelbar vor bzw. bei Beginn der mechanischen Bearbeitung durch Zerkleinerung und Reibbehandlung des Müllschrotts eine Entstaubung durchgeführt, wobei die abgesaugten Bestandteile des Müllschrotts einer Metallrückgewinnungsanlage zugeführt werden. Diese Entstaubung dient in erster Linie dazu, eine Belastung der Umwelt mit den staubförmigen Bestandteilen des Müllschrotts zu verhindern. Darüber hinaus ist es möglich, den staubförmigen Bestandteilen des Müllschrotts das darin enthaltene Eisen zu entziehen.

Ein besonders gutes Ergebnis des erfindungsgemäßen Verfahrens wird dadurch erreicht, daß die mechanische Bearbeitung des Müllschrotts solange durchgeführt wird, bis dessen Bestandteile in blankem Zustand vorliegen. Dies führt insbesondere zu einer erheblichen Verminderung der Schwefel-, Zinn-, Kupfer-, Chrom- und Nickelgehalte in dem Müllschrott. Die bei der mechanischen Bearbeitung auftretende Hitzeentwicklung bewirkt außerdem im Falle des unverbrannten Müllschrotts eine Entfernung der Lacküberzüge.

Die Bearbeitung des Müllschrotts bis zum blanken Material entfernt beim verbrannten Müllschrott darüber hinaus die sehr fest anhaftende Oxidschicht, die nachweislich die hohen Schwefelgehalte im Müllschrott verursacht. Diese Schwefelgehalte sind mindestens doppelt so hoch wie im normalen, handelsüblichen Schrott und machen deshalb bisher sehr kostenaufwendige Entschwefelungsaktionen außerhalb des Stahlerzeugungsaggregats notwendig. Derartige Entschwefelungsaktionen sind bei Anwendung des erfindungsgemäßen Verfahrens nicht erforderlich.

Gemäß einem weiteren Schritt der Erfindung wird der bei der mechanischen Bearbeitung des Müllschrotts anfallende Abrieb, der bei der anschließenden Reinigung des Müllschrotts durch Windsichtung abgetrennt wird, einer Metallrückgewinnungsanlage zugeführt. Dieser Abrieb enthält beträchtliche Anteile an Eisen und Zinn, aber auch Kupfer und Zink. Der daraus zu erzielende Erlös trägt zur Verbesserung der Wirtschaftlichkeit des erfindungsgemäßen Verfahrens bei.

Eine weitere Verbesserung der Wirtschaftlichkeit des erfindungsgemäßen Verfahrens wird dadurch erzielt, daß die bei der im Anschluß an die mechanische Bearbeitung des Müllschrotts und dessen Reinigung durch Windsichtung erfolgenden magnetischen Abscheidung anfallenden, im wesentlichen aus Nichteisenmetallen bestehenden Bestandteile des Müllschrotts einer Metallrückgewinnungsanlage zugeführt werden. Hierbei werden insbesondere Kupfer und Zink zurückgewonnen, sowie geringe Mengen an Eisen, die während der magnetischen Abscheidung an den anderen Metallen fest anhafteten und daher durch den Magneten nicht abgeschieden worden sind.

Ein weiterer Vorteil des nach dem erfindungsgemäßen Verfahren aufbereiteten Müllschrotts wird dadurch erzielt, daß der bei der magnetischen Abscheidung abgeschiedene eisenhaltige Müllschrott einer Entzinnungsanlage zugeführt wird. Aufgrund seines hohen Reinheitsgrades ist unter wirtschaftlichen Gesichtspunkten dieser Weg technisch überhaupt erst möglich.

Es hat sich als zweckmäßig erwiesen, daß die Aufbereitung von verbranntem und unverbranntem Müllschrott getrennt erfolgt, da dann die einzelnen Verfahrensschritte auf die Besonderheiten der beiden Müllschrottsorten abgestellt werden können.

Ein besonders gutes Ergebnis des erfindungsgemäßen Verfahrens ist dadurch gewährleistet, daß die Einrichtung für die Aufbereitung des Müllschrotts einen sogenannten Shredder enthält, dessen Leistungsaufnahme bei einem 1000 PS-Shredder zwischen 60 und 70 Ampere beträgt.

In weiterer Ausgestaltung der Erfindung weist der Shredder eine um etwa 20 % größere Anzahl an umlaufenden Hämmern auf als ein Autokarossen-Shredder, wobei vorteilhafterweise ein 1000 PS - Shredder mit vierzehn umlaufenden Hämmern versehen ist.

Eine weitere Verbesserung des Ergebnisses des erfindungsgemäßen Verfahrens wird dadurch erzielt, daß die vierzehn Hämmer des Shredders auf sechs Wellen angeordnet sind, wobei sich auf vier Wellen je zwei und auf zwei Wellen je drei Hämmer befinden.

Zweckmäßigerweise liegen die Wellen, auf denen jeweils drei Hämmer angeordnet sind, sich diametral gegenüber, wobei sich auf der ersten, dritten, vierten und sechsten Welle je zwei und auf der zweiten und fünften Welle je drei Hämmer befinden.

Um das Ergebnis des erfindungsgemäßen Verfahrens noch weiter zu verbessern, ist nach einem weiteren Merkmal der Erfindung das Gewicht jedes Hammers bis zu etwa 25% niedriger als das Gewicht eines Hammers eines Autokarossen-Shredders.

Ein optimales Ergebnis des erfindungsgemäßen Verfahrens wird dadurch erzielt, daß jeder Hammer eine kreisbogenförmige Oberfläche aufweist, wobei sich der Mittelpunkt des Kreisbogens etwa im Befestigungspunkt des Hammers befindet.

In der Zeichnung sind Ausführungsbeispiele der Erfindung dargestellt. Es zeigen:
Fig. 1 ein den Ablauf des erfindungsgemäßen Verfahrens darstellendes Schaubild,
Fig. 2 eine Einrichtung zur Durchführung des Verfahrens in schematischer Darstellung,
Fig. 3 den Rotor einer Einrichtung zur mechanischen Bearbeitung von Müllschrott in schematischer Darstellung,
Fig. 4 eine Tafel, aus der die Anordnung der einzelnen Hämmer des Rotors zu ersehen ist,
Fig. 5 einen Hammer des Rotors in Vorderansicht.

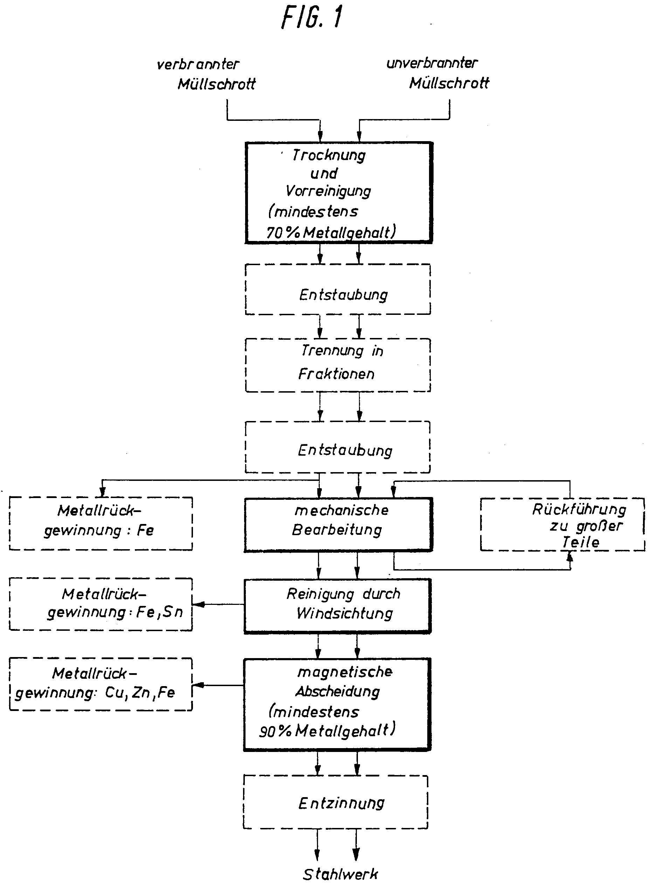

In Fig. 1 sind die notwendigen Verfahrensschritte durch mit Vollinien ausgeführte Kästchen und zweckmäßige, aber nicht unbedingt erforderliche Verfahrensschritte, durch gestrichelte Kästchen dargestellt.

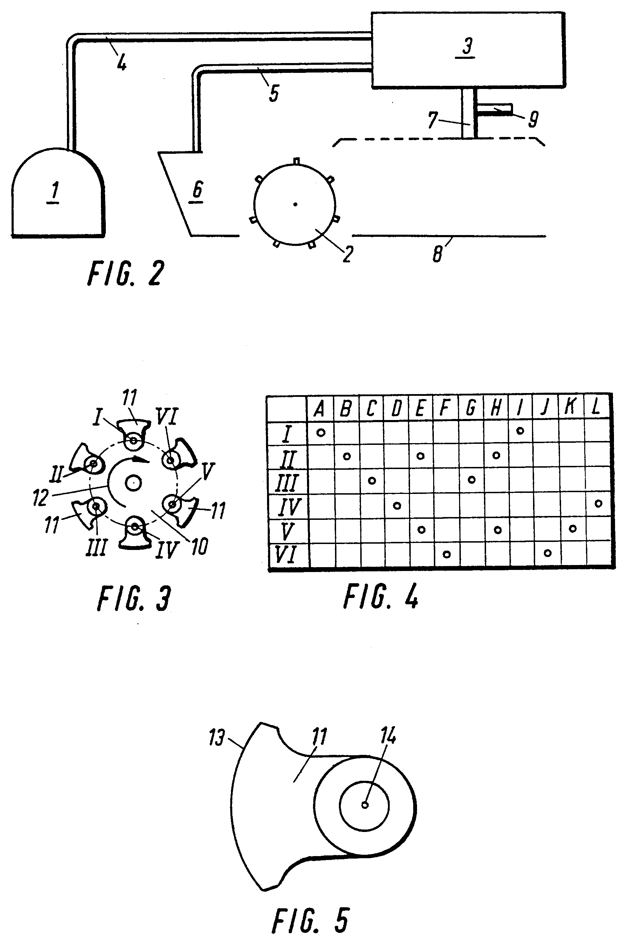

Die in Fig. 2 dargestellte Einrichtung besteht aus einer Drehtrommel 1, einem Shredder 2 und einer Entstaubungsanlage 3. Die Entstaubungsanlage 3 ist über eine Rohrleitung 4 mit der Drehtrommel 1 verbunden. Eine Rohrleitung 5 verbindet die Entstaubungsanlage 3 mit dem Bereich der Aufgabestelle 6 des Müllschrotts, während eine Rohrleitung 7 die Entstaubungsanlage 3 mit dem Bereich hinter der Austragstelle 8 für den Müllschrott an dem Shredder 2 verbindet. An die Rohrleitung 7 ist eine Fremdluftzuführungsleitung 9 angeschlossen. Dadurch wird die Saugleistung verringert, so daß nicht zuviel eisenhaltige Bestandteile abgesaugt werden.

In Fig. 3 ist ein Rotor 10 dargestellt, dessen Hämmer 11 auf sechs Wellen verteilt angeordnet sind, wobei jede der Wellen mit einer römischen Ziffer (I bis VI) versehen ist. Die Drehrichtung des Rotors 10 ist durch einen Pfeil 12 angedeutet.

Fig. 4 zeigt eine Tafel, in der die römischen Ziffern (I bis VI) den sechs Wellen gemäß Fig. 3 entsprechen. Die großen Buchstaben (A bis L) bezeichnen jeweils einen der Hämmer 11. Aus der Tafel ist zu ersehen, daß vierzehn Hämmer 11 vorhanden sind, von denen je zwei auf vier Wellen und je drei auf zwei Wellen angeordnet sind, wobei sich die Wellen (II und V), auf denen jeweils drei Hämmer 11 angeordnet sind, diametral gegenüberliegen. Bei einer höheren Anzahl von Hämmern 11 müssen die weiteren Hämmer so angeordnet sein, daß keine Unwucht auftritt.

Der in Fig. 5 dargestellte Hammer 11 weist eine kreisbogenförmige Oberfläche 13 auf. Der Mittelpunkt 14 des betreffenden Kreisbogens befindet sich etwa im Befestigungspunkt des Hammers 11.

## Patentansprüche

1. Verfahren zum Aufbereiten von Müllschrott zur Gewinnung des darin enthaltenen Metalls, dadurch gekennzeichnet,
daß der Müllschrott einer Trocknung und einer Vorreinigung in einer Drehtrommel, einer Kaskade oder mittels eines Vibrationssiebes unterzogen wird, um den Metallgehalt des Müllschrotts auf mindestens 70% zu erhöhen;
daß der Müllschrott sodann zerkleinert und die Oberflächen der Bestandteile des Müllschrotts einer Reibbehandlung ausgesetzt werden und
daß schließlich eine Windsichtung und anschließend eine magnetische Abscheidung erfolgt, wodurch der Metallgehalt des Müllschrotts auf mindestens 90% und sein Schüttgewicht auf mindestens 1,0 t/m³ erhöht werden.

2. Verfahren nach Anspruch 1, dadurch gekennzeichnet, daß der Müllschrott in mindestens zwei Fraktionen - eine Grob- und eine Feinfraktion - getrennt wird, die gesondert aufbereitet werden.

3. Verfahren nach Anspruch 2, dadurch gekennzeichnet, daß die Trocknung und die Vorreinigung des Müllschrotts sowie die Trennung des Müllschrotts in Fraktionen gleichzeitig erfolgt.

4. Verfahren nach einem der Ansprüche 1 bis 3, dadurch gekennzeichnet, daß unmittelbar vor bzw. bei Beginn der mechanischen Bearbeitung durch Zerkleinerung und Reibbehandlung des Müllschrotts eine Entstaubung durchgeführt wird, wobei die abgesaugten Bestandteile des Müllschrotts einer Metallrückgewinnungsanlage zugeführt werden.

5. Verfahren nach einem der Ansprüche 1 bis 4, dadurch gekennzeichnet, daß die mechanische Bearbeitung des Müllschrotts solange durchgeführt wird, bis dessen Bestandteile im blanken Zustand vorliegen.

6. Verfahren nach einem der vorhergehenden Ansprüche, dadurch gekennzeichnet, daß der bei der mechanischen Bearbeitung des Müllschrotts anfallende Abrieb, der bei der anschließenden Reinigung des Müllschrotts durch Windsichtung abgetrennt wird, einer Metallrückgewinnungsanlage zugeführt wird.

7. Verfahren nach einem der vorhergehenden Ansprüche, dadurch gekennzeichnet, daß die im Anschluß an die mechanische Bearbeitung des Müllschrotts und dessen Reinigung durch Windsichtung erfolgenden magnetischen Abscheidung anfallenden, im wesentlichen aus Nichteisenmetallen bestehenden Bestandteilen des Müllschrotts einer Metallrückgewinnungsanlage zugeführt werden.

8. Verfahren nach einem der vorhergehenden Ansprüche, dadurch gekennzeichnet, daß der bei der magnetischen Abscheidung abgeschiedene eisenhaltige Müllschrott einer Entzinnungsanlage zugeführt wird.

9. Verfahren nach einem der vorhergehenden Ansprüche, dadurch gekennzeichnet, daß die Aufbereitung von verbranntem und unverbranntem Müllschrott getrennt erfolgt.

## Claims

1. A method of processing scrap metal in order to recover the metal contained therein, characterised in that the scrap metal is subjected to drying and preliminary cleansing in a rotary drum, a cascade or by means of a vibrating screen in order to increase the metal content of the scrap metal to at least 70%;
and in that the scrap metal is then comminuted and the surfaces of the constituents of the scrap metal are exposed to a friction treatment and
in that finally, a pneumatic separation takes place to be followed by a magnetic separation, so that the metal content of the scrap metal is increased to at least 90% while its bulk weight is increased to at least 1 t/cu.m.

2. A method according to Claim 1, characterised in that the scrap metal is separated into at least two fractions - a coarse fraction and a fine fraction - the fractions then being processed separately.

3. A method according to Claim 2, characterised in that the drying and preliminary cleansing of the scrap metal as well as the separation of the scrap metal into fractions all occur simultaneously.

4. A method according to one of Claims 1 to 3, characterised in that immediately prior to or at the start of mechanical processing by comminution and friction treatment of the scrap metal, elimination of dust is carried out, the vacuum extracted constituents of the scrap metal being fed to a metal recovery plant.

5. A method according to one of Claims 1 to 4, characterised in that the mechanical processing of the scrap metal is carried out until such time as its constituents are present in a bright state.

6. A method according to one of the preceding Claims, characterised in that the abrasion occurring during mechanical processing of scrap metal and which is separated off during subsequent cleansing of the scrap metal by pneumatic separation, is fed to a metal recovery plant.

7. A method according to one of the preceding Claims, characterised in that the constituents of the scrap metal which occur following on from the mechanical processing of the scrap metal and its cleansing by pneumatic separation, and which substantially consists of non-ferrous metals, are fed to a metal recovery plant.

8. A method according to one of the preceding Claims, characterised in that the ferriferous scrap metal which is separated off during magnetic separation is fed to a tin removing plant.

9. A method according to one of the preceding Claims, characterised in that the processing of incinerated and non-incinerated scrap metal are performed separately.

## Revendications

1. Procédé de traitement de déchets métalliques pour la récupération des métaux y contenus, caractérisé en ce que les déchets métalliques sont soumis à un séchage et à une purification préalable dans un tambour rotatif, une cascade ou au moyen d'un tamis vibrant afin d'amener la teneur en métal des déchets métalliques à au moins 70%, en ce que les déchets métalliques sont ensuite concassés, et les surfaces des éléments des déchets métalliques sont soumises à frottements, et en ce qu'un triage à vent a ensuite lieu, suivi d'une séparation magnétique, de façon à porter la teneur en métal des déchets métalliques à au moins 90%, et leur poids a environ 1,0 T/m³.

2. Procédé selon la revendication 1, caractérisé en ce que les déchets métalliques sont séparés en au moins deux fractions - une fraction fine et une fraction grossière - qui sont traitées séparément.

3. Procédé selon la revendication 2, caractérisé en ce que le séchage et la purification préalable des déchets métalliques, ainsi que la séparation des déchets métalliques en différentes fractions, s'effectuent simultanément.

4. Procédé selon l'une des revendications 1 à 3, caractérisé en ce qu'un dépoussiérage est effectué immédiatement avant ou au début du traitement mécanique des déchets métalliques, par concassage et purification, et les éléments des déchets métalliques aspirés sont envoyés à une installation de récupération de métaux.

5. Procédé selon l'une des revendications 1 à 4, caractérisé en ce que le traitement mécanique des déchets métalliques est poursuivi suffisamment longtemps pour que les éléments ainsi traités présentent des surfaces dénudées.

6. Procédé selon l'une des revendications précédentes, caractérisé en ce que le poussier provenant du traitement mécanique des déchets métalliques, qui est séparé au cours de la purification ultérieure des déchets métalliques par triage à vent, est envoyé à une installation de récupération de métaux.

7. Procédé selon l'une des revendications précédentes, caractérisé en ce que les éléments des déchets métalliques formés essentiellement de métaux non ferreux et résultant du traitement mécanique des déchets métalliques et de leur purification par triage à vent et séparation magnétique, sont envoyés à une installation de récupération de métaux.

8. Procédé selon l'une des revendications précédentes, caractérisé en ce que les déchets métalliques riches en fer obtenus par séparation magnétique, sont envoyés à une installation de désétamage.

9. Procédé selon l'une des revendications précédentes, caractérisé en ce que le traitement des déchets métalliques incinérés et non incinérés s'effectue séparément.
